**Europäisches Patentamt**

**European Patent Office**

**Office européen des brevets**

(19)

(11) **EP 1 369 729 A2**

(12) **EUROPÄISCHE PATENTANMELDUNG**

(43) Veröffentlichungstag:
**10.12.2003 Patentblatt 2003/50**

(51) Int Cl.⁷: **G02B 21/02**

(21) Anmeldenummer: **03010693.4**

(22) Anmeldetag: **13.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **06.06.2002 DE 10225192**

(71) Anmelder: **Leica Microsystems (Schweiz) AG 9435 Heerbrugg (CH)**

(72) Erfinder:
• **Zimmer, Klaus Peter**
  **9435 Heerbrugg (CH)**
• **Rottermann, Ruedi**
  **9442 Berneck (CH)**

(74) Vertreter: **Hössle Kudlek & Partner Patentanwälte,
Postfach 10 23 38
70019 Stuttgart (DE)**

(54) **Objektiv für Stereomikroskope vom Teleskop-Typ**

(57)   Die Erfindung betrifft ein Objektiv (2) für Stereomikroskope vom Teleskop-Typ, das drei optische Baugruppen (G1, G2, G3) beinhaltet, wobei die erste Baugruppe (G1) zur Objektseite hin und die dritte Baugruppe (G3) zu einem Vergrößerungswechsler (3L, 3R) hin angeordnet ist. Das vorgeschlagene Objektiv (2) erfüllt die Bedingungen $0,44 \leq ENP/F \leq 0,6$, wobei ENP den Durchmesser der Eintrittspupille des Vergrößerungswechslers (3L, 3R) bei höchster Vergrößerung und F die Brennweite des Objektives (2) bezeichnet, sowie tan (wl) $\geq 0,16$, wobei wl den maximalen Feldwinkel des Objektives (2) bei schwächster Vergrößerung des Vergrößerungswechslers (3L, 3R) bezeichnet. Das vorgeschlagene Objektiv (2) erlaubt die Nutzung eines Stereomikroskops mit höchster Auflösung und einem Gesichtsfeld, das dem gesamten Bereich der Mikroskopvergrößerung angepaßt ist.

Fig. 1

**EP 1 369 729 A2**

**Beschreibung**

Die Erfindung betrifft ein Objektiv hoher Auflösung für Stereomikroskope vom Teleskop-Typ, das drei optische Baugruppen beinhaltet, wobei die erste Gruppe zur Objektseite hin und die dritte Gruppe zu einem Vergrößerungswechsler hin angeordnet ist.

Stereomikroskope sind üblicherweise mit einem Vergrößerungswechsler ausgestattet, der einerseits eine hohe Objektvergrößerung und andrerseits die Betrachtung großer Objektfelder erlaubt. Diese Geräte werden beispielsweise in Technologie-Unternehmen, zur Manipulation und zur Inspektion kleiner Objekte, wie beispielsweise HalbleiterStrukturen oder mikromechanische Objekte, in Forschungsinstituten der Biowissenschaften und der Materialkunde sowie auch beispielsweise zur Untersuchung und Manipulation von Zellen oder zu operativen Zwecken eingesetzt. Im Zuge der Miniaturisierung und der Erforschung immer kleinerer Präparate steigen einerseits die Anforderungen an die Auflösung dieser Mikroskope, andererseits gewinnt die Größe des Gesichtsfeldes bei schwacher Vergrößerung zum schnellen Positionieren der Präparate und zur verbesserten Übersicht bei Inspektionen an Bedeutung.

Um bei einem Stereomikroskop die Vergrößerung zu variieren, werden Vergrößerungswechsler (Prinzip des Fernrohres oder Zooms) hinter das Objektiv geschaltet. Das Verhältnis von maximaler zu minimaler Vergrößerung wird mit z bezeichnet. Mit einem Zoom läßt sich die Vergrößerung über einen bestimmten Bereich stufenlos verändern. Es sind afokale Zooms bekannt, die Objektstrahlen aus dem Unendlichen ins Unendliche abbilden und eine Vergrößerungsvariation ohne Veränderung der Objekt- und der Bildlage erlauben.

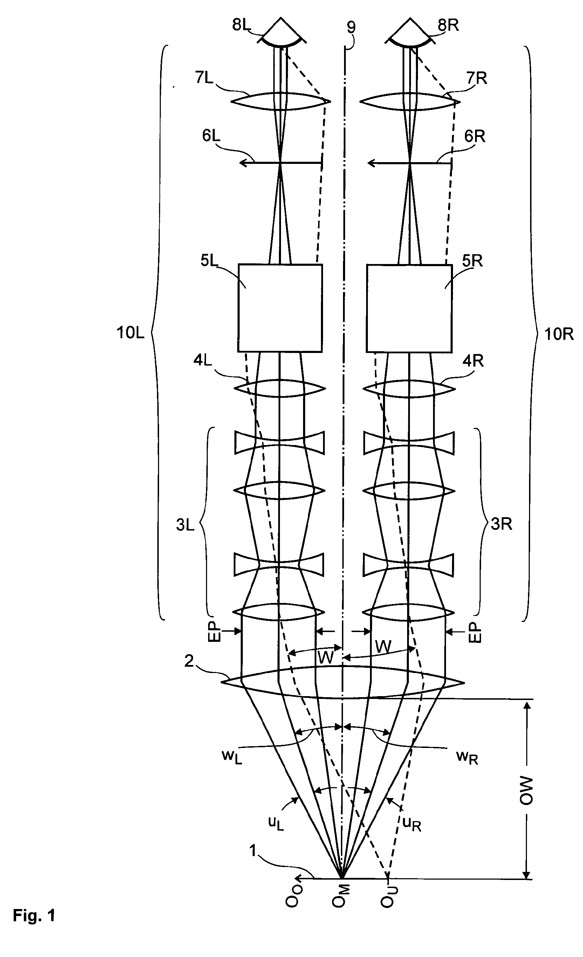

Figur 1 zeigt die Prinzipsskizze eines Stereomikroskops vom Teleskop-Typ. Das Stereomikroskop ermöglicht dem Betrachter, dessen Augenpaar mit 8R bzw. 8L bezeichnet ist, einen räumlichen Eindruck des betrachteten Objektes 1 zu erhalten. Hierzu wird das Objekt 1, das sich im vorderen Brennpunkt des Objektivs 2 befindet, über zwei voneinander getrennte optische Kanäle abgebildet. Die beiden Betrachtungskanäle 10L und 10R sind in gleicher Weise aufgebaut und enthalten jeweils ein Vergrößerungswechslersystem 3L, 3R, eine Tubuslinse 4L, 4R und jeweils ein Okular 7L, 7R. Hinter den Tubuslinsen 4L, 4R angeordnete Bildumkehrsysteme 5L, 5R sorgen für seitenrichtige aufrechte Zwischenbilder 6L, 6R, die mit dem Paar gleicher Okulare 7L, 7R visuell betrachtet werden. Die genannten Paare von optischen Elementen sind parallel und symmetrisch zur Achse 9 des Objektivs 2 angeordnet. Die beiden Vergrößerungswechsler 3L, 3R verändern wahlweise die Vergrößerung, jedoch in gleicher Weise für den linken und den rechten Kanal 10L, 10R.

Die beiden Zwischenbilder 6L und 6R sind verschiedene Bilder des Objektes 1, da das Objekt 1 in dem linken Kanal 10L unter dem Winkel wL und im rechten Kanal 10R unter dem Winkel wR betrachtet wird. Auf diese Weise ist eine stereoskopische Betrachtung des Objekts 1 möglich, in gleicher Weise wie bei der direkten Betrachtung eines Objekts durch das Augenpaar 8L, 8R. Die beiden unterschiedlichen Bilder werden im Gehirn zu einem 3-dimensionalen Bildeindruck verarbeitet.

Mit EP ist der Durchmesser der Eintrittspupille der in gleicher Weise verstellbaren Vergrößerungswechsler 3L, 3R benannt. Mit uL und uR sind die halben Öffnungswinkel der Kegel mit Spitze in der Objektmitte OM, der durch die Eintrittspupille begrenzt wird, bezeichnet. uL und uR sind gleich groß, da das Mikroskop symmetrisch zur Achse 9 des Objektivs 2 ist. uL und uR können folglich gemeinsam mit u benannt werden. Da wR und wL nicht groß sind, gilt die für gut korrigierte optische Systeme, die der Sinusbedingung genügen, bekannte Beziehung EP = 2 x F x sin (u) = 2 x F x nA, wobei nA die wirksame numerische Apertur (in Luft) des Objektivs bezogen auf die Eintrittspupille des dem Objektiv 2 nachgeschalteten Vergrößerungswechslers 3L bzw. 3R und F die Brennweite des Objektivs 2 darstellt. Bei einer Wellenlänge von λ = 550nm erhält man für das Auflösungsvermögen als Faustformel 3000 x nA (in Linienpaaren pro mm). Eine hohe Apertur ist somit Voraussetzung für eine hohe Auflösung.

Bei der stärksten Vergrößerung des Vergrößerungswechslers 3L, 3R ist der Eintrittspupillendurchmesser EP maximal groß und wird dann mit ENP bezeichnet. Bei den dargestellten Vergrößerungswechslern kann es sich um die bereits erwähnten afokalen Zooms oder Fernrohrsysteme handeln.

In Figur 1 ist ebenfalls der Verlauf eines Strahls, der vom unteren Objektrand Ou zum Rand des Zwischenbildes verläuft, schematisch dargestellt. Er bildet in dem Raum zwischen Objektiv und Vergrößerungswechsler mit der Achse 9 des Objektivs 2 einen Winkel w. w ist der Feldwinkel des Objektivs 2, er ist maximal bei schwächster Vergrößerung der Vergrößerungswechsler 3L und 3R. Der maximale Wert von w wird im folgenden mit w1 bezeichnet. Die Objektweite, also der Abstand des Objekts 1 von der ersten Fläche des Objektivs 2 ist mit OW bezeichnet.

Das Objektiv 2 ist in Figur 1 nur schematisch dargestellt. In der Regel bilden die Objektive Linsensysteme, die aus Einzellinsen und/oder verkitteten Linsen (Kittgliedern) bestehen.

Aus der japanischen Offenlegungsschrift JP 2001-147378 ist ein Objektivsystem für ein Stereomikroskop bekannt, das aus drei Linsengruppen besteht, wobei die beiden äußeren Linsengruppen positive Brechkraft aufweisen und die mittlere Linsengruppe mindestens ein Kittglied enthält, das aus drei Linsenelementen besteht. In einem Ausführungsbeispiel besteht die objektseitige Linsengruppe aus einer Einzellinse, gefolgt von der zweiten Linsengruppe, die zwei Kittglieder enthält mit drei bzw. zwei verkitteten Linsen, wiederum gefolgt von der dritten Linsengruppe, bestehend aus einem Kittglied mit zwei Linsen. Mit dem genannten Aufbau sollen die optischen Abbildungsfehler, Verzeichnung und chromatische Aberration, weitestgehend unterdrückt werden können. Die veröffentlichten Beispiele weisen eine numerische Apertur nA von 0,13 und 0,20 auf. Die Auflösung dieser Objektive liegt somit im bekannten Rahmen.

In der japanischen Offenlegung JP 101 70 832 A, wird eine Vorsatzlinse ("conversion lens") beschrieben, die vor das Objektiv eines Stereomikroskops schaltbar ist und in Kombination mit diesem Hauptobjektiv eine kurze Brennweite ergibt. Aufgrund der resultierenden hohen Vergrößerung wird die Vorsatzlinse zur Betrachtung extrem kleiner Objektstrukturen eingesetzt, während zur Betrachtung des Objektes mit großem Gesichtsfeld die Vorsatzlinse entfernt werden kann. Nachteil einer solchen Konstruktion ist die hohe Anzahl der verwendeten Linsen sowie die Notwendigkeit, eine Vorsatzlinse aufzubringen bzw. zu entfernen. Die vorgeschlagene Kombination besteht aus insgesamt zwölf Linsen.

Die Vorsatzlinse in der genannten Schrift besteht aus drei Linsengruppen, von denen die beiden äußeren positive Brechkraft besitzen und aus jeweils zwei gekitteten Linsen bestehen, während die mittlere Linsengruppe ein meniskusförmiges Kittglied ist. Das eigentliche Hauptobjektiv besteht von der Objektseite her gesehen aus einer Einzellinse, gefolgt von einem Kittglied aus zwei Linsen, gefolgt von einem weiteren Kittglied aus zwei Linsen und einer weiteren Einzellinse.

Die Firma OLYMPUS bietet unter der Bezeichnung SZX-AL20 eine solche Vorsatzlinse an. Die Kombination aus Vorsatzlinse und Objektiv hat eine numerische Apertur von nA = 0,275, ist aber nur in einem begrenzten Bereich des Zooms verwendbar, außerhalb dessen das Bild durch Vignettierung beschnitten wird. Der Objektabstand OW der Objektiv-Vorsatzlinse-Kombination beträgt nur noch etwa 10mm, wodurch das Bearbeiten von Objekten unter dem Mikroskop erheblich erschwert wird.

Von der Anmelderin ist ein Stereomikroskop unter der Bezeichnung "MZ 12" auf dem Markt, für das Objektive mit einer Brennweite von F = 50 mm und einem maximalen Durchmesser der Eintrittspupille von ENP = 20 mm zur Verfügung stehen. Bei diesem Objektiv, das bereits eine hohe Vergrößerung aufweist, ist der Abstand des Objekts zur ersten Fläche des Objektivs OW = 21,3 mm, was die Bearbeitung von Objekten unter akzeptablen Bedingungen ermöglicht.

Schließlich ist aus der US-4,640,586 ein Objektiv für ein Stereomikroskop vom Teleskop-Typ bekannt, das optische Täuschungen hinsichtlich der Ebenheit bei der Untersuchung eines Objektes vermeiden hilft. In einer Ausführungsform (Beispiel 5) besteht das Objektiv aus zwei Einzellinsen positiver Brechkraft, gefolgt von einem meniskusförmigen Kittglied, gefolgt von einem weiteren meniskusförmigen Kittglied und einer dritten Einzellinse positiver Brechkraft. Die Brennweite beträgt 49,98mm, der Abstand der Achsen der Vergrößerungswechsler ist mit 22mm angegeben, woraus sich ergibt, daß der maximale Durchmesser der kreisförmigen Eintrittspupille des Vergrößerungswechslers um einiges kleiner als 22 mm sein muß.

Aufgabe der vorliegenden Erfindung ist es, ein verbessertes Objektiv der genannten Art anzugeben, das bei Verwendung in einem Stereomikroskop mit einem Vergrößerungswechsler eine hohe Auflösung bei einer dazu angepaßten starken Vergrößerung aufweist, wobei das Auflösungsvermögen höher sein soll als das bekannter Stereomikroskope, und wobei weiterhin der gesamte Vergrößerungsbereich des Mikroskops ohne Vignettierung nutzbar sein soll. Gleichzeitig soll das Mikroskop einen möglichst großen Arbeitsabstand besitzen.

Diese Aufgabe wird durch ein Objektiv gemäß Hauptanspruch gelöst. Vorteilhafte Ausführungsformen ergeben sich aus den Unteransprüchen und der nachfolgenden Beschreibung.

Erfindungsgemäß erfüllt das Objektiv für Stereomikroskope vom Teleskop-Typ mit einem Vergrößerungswechsler zwei Bedingungen, nämlich

(B1) $0,44 \leq \dfrac{ENP}{F} \leq 0,6$ bei höchster Mikroskopvergrößerung und

(B2) $0,16 \leq tan(w1)$ bei niedrigster Mikroskopvergrößerung.

Die Bedingung (B1) gibt eine untere und eine obere Grenze für den halben Öffnungswinkel u (Vergleiche Figur 1) des Strahlenkegels mit seiner Spitze in der Objektmitte OM an, der durch die Eintrittspupille bei stärkster Vergrößerung begrenzt wird. Der Sinus des Öffnungswinkels u entspricht der numerischen Apertur nA des Stereomikroskops. Da weiterhin das Auflösungsvermögen proportional zur numerischen Apertur nA des Stereomikroskops ist, stellt die Bedingung (B1) eine Unter- und Obergrenze für die Auflösung dar. Die Bedingung (B1) verknüpft die Brennweite des Objektivs mit dem maximalen Durchmesser der Eintrittspupille des Vergrößerungswechslers und stellt sicher, daß die maximale Mikroskopvergrößerung der Mikroskopauflösung angepaßt ist und nicht eine leere Vergrößerung erzeugt wird, wenn nur, wie üblich, das optische System aus Vergrößerungswechsler, Tubus und Okular innerhalb des Bereichs der förderlichen Vergrößerung arbeitet.

Die Bedingung (B2) gibt eine Untergrenze für den Feldwinkel w des Objektivs (vergleiche Figur 1) bei schwächster Vergrößerung des Mikroskops an. Die Erfüllung dieser Bedingung garantiert, daß in Mikroskopen, bei denen das Verhältnis z von maximaler zu minimaler Vergrößerung groß ist, auch bei schwächster Vergrößerung das gesamte, sich theoretisch ergebende Gesichtsfeld ohne Vignettierung nutzbar ist.

Stereomikroskop-Objektive der genannten Art, die die Bedingungen (B1) und (B2) erfüllen, unterscheiden sich von denen des Standes der Technik dadurch, daß sie eine höhere Auflösung besitzen und im gesamten Vergrößerungsbereich des Mikroskops (ohne zusätzliche Verwendung von Vorsatzlinsen oder dergleichen und ohne Vignettierung) nutzbar sind.

Verwendet man beispielsweise als Vergrößerungswechsler einen Zoom mit einem Zoomfaktor $z \geq 12$ und ein Okular mit einer Sehfeldzahl von $\geq 21$ mm, so ist bei Stereomikroskopen, die im Bereich der förderlichen Vergrößerung arbeiten, bei einer Unterschreitung der durch die Bedingung (B2) gesetzten Untergrenze bei geringster Vergrößerung nicht mehr das gesamte sich theoretisch ergebende Gesichtsfeld auch nutzbar.

Es ist insbesondere vorteilhaft, die Untergrenze der Bedingung (B1) mit 0,55 zu wählen, um eine deutliche Steigerung der Auflösung des Objektivs sicherzustellen. Es werden weiter unten Ausführungsbeispiele von Objektiven angegeben, die die genannten Bedingungen erfüllen.

Beim erfindungsgemäßen Objektiv, das aus drei optischen Baugruppen besteht, haben sich weitere Bedingungen für die erste, dem Objekt zugewandte Baugruppe G1 sowie für die dem Objekt abgewandte dritte Baugruppe G3 als vorteilhaft erwiesen, wobei für die Brennweite f1 der ersten Baugruppe gelten soll:

$1,3 < \dfrac{f1}{F} < 1,8$, wobei insbesondere diese erste Gruppe nur aus einer Einzellinse besteht, und wobei für die Brennweite f3 der dritten Baugruppe die Bedingung

$2 < \dfrac{f3}{b} < 4$ gelten soll und insbesondere die dritte Baugruppe ebenfalls nur aus einer Einzellinse besteht.

Eine kürzere Brennweite der ersten optischen Baugruppe (also f1 < 1,3 x F) hat bei den Ausführungsformen des erfindungsgemäßen Objektivs stärkere Aberrationen am Bildrand zur Folge, die in den nachfolgenden Baugruppen G2 und G3 nur noch schwer zu kompensieren sind. Überschreitet hingegen die Brennweite f1 den Wert von 1,8 x F, so hat dies einen größeren Objektivdurchmesser zur Folge, was ein unerwünscht hohes Gewicht nach sich zieht. Es hat sich insgesamt als vorteilhaft erwiesen, die erste Baugruppe G1 als Einzellinse auszuführen.

Wenn auch bei der Stereobeobachtung in jedem Kanal nur Teile der Öffnung des Objektivs genutzt werden, ist doch eine gute Korrektion des Öffnungsfehlers des Objektivs bei voller Öffnung unerläßlich. Dies erfolgt am wirksamsten an der dritten optischen Baugruppe des Objektivs, da dort der Bündeldurchmesser groß ist. Hier erweist sich eine Brennweite f3, die dem 2- bis 4-fachen der Brennweite des gesamten Objektivs entspricht, als vorteilhaft. Eine längere oder kürzere Brennweite ist nicht geeignet, um den Öffnungsfehler, der in den Baugruppen G1 und G2 allein nicht notwendig vollständig korrigiert ist, zu kompensieren. Zudem erschwert eine kürzere Brennweite f3 die Gestaltung der Baugruppe G1 und insbesondere der Baugruppe G2, wenn ein großer Arbeitsabstand OW erforderlich ist. Es hat sich gezeigt, daß die optische Baugruppe G3 mit Vorteil als Einzellinse realisierbar ist.

Die Bedingung $\dfrac{OW}{F} \geq 0,42$ setzt den Abstand der Objektebene zur ersten Fläche der Baugruppe G1 des erfindungsgemäßen Objektivs in ein Verhältnis zur Gesamtbrennweite F dieses Objektivs und garantiert einen Objektabstand, der eine Bearbeitung unter dem Mikroskop bequem ermöglicht. Bei einer bevorzugten Objektivbrennweite von F = 40mm muß OW $\geq$ 16,8 mm erfüllt sein.

Bezüglich der zweiten optischen Baugruppe G2 hat sich als günstig erwiesen, wenn der zur Gruppe G3 weisende letzte Radius Rk dieser zweiten Gruppe die Bedingung $0,7 < \dfrac{Rk}{F} < 1,1$ erfüllt. In diesem angegebenen Bereich ist es insbesondere möglich, die Baugruppen G2 und G3 so aufeinander abzustimmen, daß für Objektive mit derart hohen Aperturen und großen Feldern die Korrektion der Abbildungsfehler bei einer geringen Linsenzahl möglich ist. Ein Aufbau der drei optischen Baugruppen aus insgesamt höchstens 8 Linsen ist bei hoher Abbildungsqualität möglich und vorteilhaft, da mit steigender Linsenzahl Kosten und Gewicht der Stereomikroskope ansteigen.

Eine hohe Güte der Korrektion der Farbfehler erhält man durch Wahl von optischen Gläsern, die einer der Bedingungen $| P_{g,F} - 0,6438 + 0,001682 \times v_d | > 0,0075$ oder
$| P_{C,t} - 0,5450 - 0,004743 \times v_d | > 0,025$ genügen, wobei $v_d = (n_d - 1) / (n_F - n_C)$ die Abbezahl, $P_{g,F} = (n_g - n_F) / (n_F - n_c)$ die relative Teildispersion für die Wellenlängen g und F und $P_{C,t} = (n_C - n_t) / (n_F - n_C)$ die relative Teildispersion für die Wellenlängen C und t bedeutet und n die Brechzahl bei der jeweiligen Wellenlänge darstellt.

Mit derartigen Gläsern sind nicht nur die primären Farbfehler zu korrigieren, sondern auch das sekundäre Spektrum läßt sich deutlich reduzieren. Es ist insbesondere vorteilhaft, derartige Gläser für die optische Baugruppe G3, die insbesondere nur aus einer Einzellinse besteht, zu verwenden.

Ein weiterer Vorteil ergibt sich aus der Verwendung von höchstens drei verschiedenen Materialien, insbesondere den genannten farbfehlerkorrigierenden Gläsern, für die optischen Baugruppen des erfindungsgemäßen Objektivs.

Im folgenden sollen anhand der Figuren Ausführungsbeispiele die Erfindung und ihre Vorteile näher erläutern.

Es zeigt

Figur 1    die schematische Darstellung eines Stereomikroskops vom Teleskop-Typ gemäß Stand der Technik,

Figur 2 die Skizze eines erfindungsgemäßen Objektivs mit eingezeichnetem Strahlengang für maximale (Figur 2a) und minimale (Figur 2b) Vergrößerung des Vergrößerungswechslers,

Figur 3 die Abbildungsleistung des Objektivs für den Fall der stärksten (Figur 3a) und für den Fall der schwächsten (Figur 3b) Vergrößerung,

Figur 4 eine zweite Ausführungsform des erfindungsgemäßen Objektivs mit eingezeichnetem Strahlenverlauf bei maximaler Vergrößerung (Figur 4a) und minimaler Vergrößerung (Figur 4b) des Vergrößerungswechslers,

Figur 5 die zugehörige Abbildungsleistung für den Fall der stärksten (Figur 5a) und schwächsten (Figur 5b) Vergrößerung,

Figur 6 eine dritte Ausführungsform des erfindungsgemäßen Objektivs mit eingezeichnetem Strahlenverlauf für maximale (Figur 6a) und minimale (Figur 6b) Vergrößerung des Vergrößerungswechslers und

Figur 7 die zugehörige Abbildungsleistung bei stärkster (Figur 7a) und schwächster (Figur 7b) Mikroskopvergrößerung.

Das in Figur 1 schematisch dargestellte Stereomikroskop wurde in der Beschreibungseinleitung ausführlich besprochen. Das Objektiv 2 ist dort stark vereinfacht dargestellt.

Die folgenden drei Ausführungsformen des erfindungsgemäßen Objektivs zeigen Anordnungen von Linsen, die den oben genannten Bedingungen (B1) und (B2) gerecht werden. Das erfindungsgemäße Objektiv 2 stellt das in der bereits behandelten Figur 1 nur schematisch dargestellte Objektiv 2 dar.

## Erste Ausführungsform

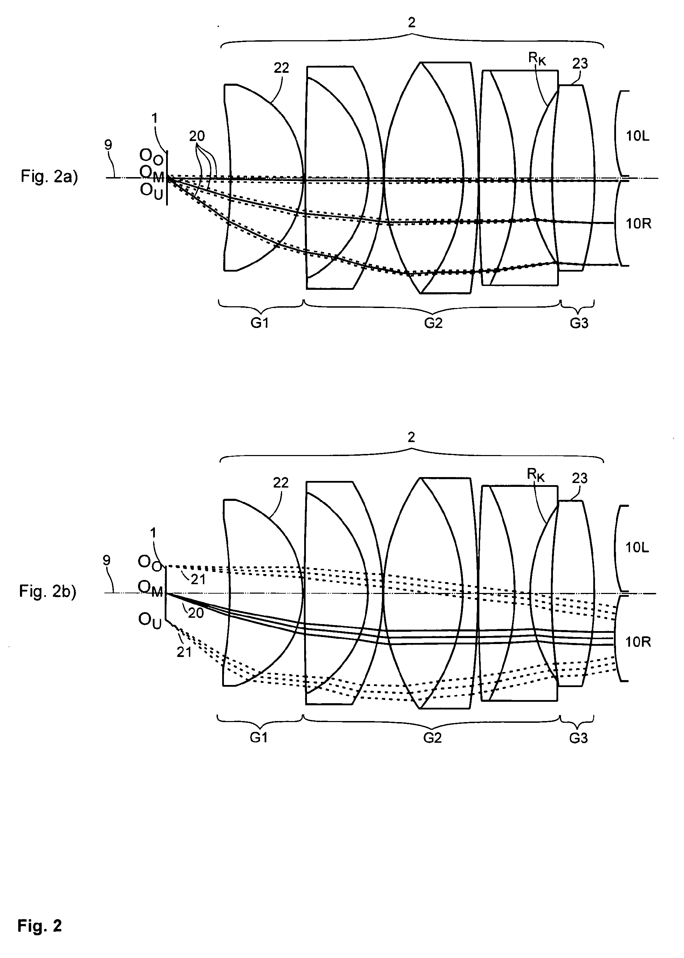

Figur 2 zeigt den schematischen Linsenschnitt durch die erste Ausführungsform. Auf der rechten Seite der Zeichnung sind die beiden parallelen Stereokanäle 10L und 10R schematisch angedeutet. Auf der linken Seite der Figur ist schematisch das Objekt 1 dargestellt. Der dargestellte Strahlenverlauf beschränkt sich aus Gründen der Übersichtlichkeit nur auf die Strahlen eines Stereokanals 10R. Die Linien 20 beschreiben das Strahlenbüschel, das von der Mitte des Objekts OM ausgeht, die Linien 21 beschreiben die Strahlenbüschel, die vom oberen bzw. unteren Objektrand Oo, Ou ausgehen.

Das Objektiv 2 ist aus acht Linsen aufgebaut, die in fünf durch Luftabstände getrennte Glieder unterteilt sind. Als erste Gruppe G1 sei das erste objektseitige Linsenglied bezeichnet. Es besteht aus einer Einzellinse 22 mit positiver Brechkraft. Als dritte optische Baugruppe wird das dem Vergrößerungswechsler zugewandte Linsenglied bezeichnet, das ebenfalls aus einer Einzellinse 23 mit positiver Brennweite besteht. Die dazwischen liegenden Linsenglieder werden zu einer zweiten optischen Baugruppe G2 zusammengefaßt. Der letzte Radius Rk der Gruppe G2 ist konkav. Mit OW wird der Abstand des Objekts 1 von der ersten Fläche der ersten optischen Baugruppe G1 (vergleiche Figur 1) gekennzeichnet.

Die Figur 2 zeigt, daß das Strahlenbüschel 20, das von der Objektmitte OM ausgeht, das Objektiv 2 nicht symmetrisch zur optischen Achse 9 des Objektivs 2 durchläuft. Ebenfalls ist deutlich, daß die Strahlenbüschel 21 vom oberen Rand Oo und vom unteren Rand Ou des Objekts 1 unsymmetrisch zur optischen Achse 9 des Objektivs 2 verlaufen.

Aus Figur 2a ist ersichtlich, daß im Falle der starken Vergrößerung die optische Baugruppe G1 (Einzellinse 22) den Öffnungswinkel maßvoll reduziert und daher keine großen Abbildungsfehler in Lichtbündeln (Strahlenbüschel 20) erzeugt, die von der Objektmitte OM ausgehen. Wie aus Figur 2b ersichtlich, wird hingegen im Falle der schwachen Vergrößerung das Licht vom Feldrand (insbesondere Strahlenbüschel 21 Ou) stark gebrochen, so daß ein großer Objektivdurchmesser vermieden wird. Eine Brennweite f1 der Baugruppe G1, die dem 1,3- bis 1,8-fachen der Brennweiten F des gesamten Objektivs 2 entspricht, hat sich in diesem Zusammenhang als vorteilhaft erwiesen. Ein derartiges Linsenglied läßt sich wie dargestellt sogar als Einzellinse 22 realisieren. Eine kürzere Brennweite f1 der ersten Baugruppe G1 hätte stärkere Aberrationen am Bildrand bei schwacher Vergrößerung (vergleiche Figur 2b) zur Folge, die in den folgenden Baugruppen G2 und G3 nur noch schwer zu kompensieren sind. Hingegen hätte eine längere Brennweite f1 einen größeren Objektivdurchmesser zur Folge, der ein unerwünscht hohes Gewicht nach sich zieht. Im dargestellten Beispiel ist f1/F = 1,58.

Obgleich auch bei der Stereobeobachtung von jedem Kanal 10L und 10R nur Teile der Öffnung des Objektivs 2 genutzt werden (vergleiche Figur 1), so ist doch eine gute Korrektion des Öffnungsfehlers des Objektivs 2 bei voller Öffnung unerläßlich. Da der Bündeldurchmesser in der optischen Baugruppe G3 groß ist, wird vorteilhaft hier die Korrektion vorgenommen. Es hat sich gezeigt, daß eine Brennweite f3 der optischen Baugruppe G3, die dem 2- bis 4-fachen der Brennweite F des gesamten Objektivs entspricht, für diese Zwecke von Vorteil ist. Die Baugruppe G3 läßt sich vorteilhaft sogar als Einzellinse 23 realisieren. Eine längere oder kürzere Brennweite f3 wäre nicht geeignet, um den Öffnungsfehler, der in den Baugruppen G1 und G2 allein nicht notwendig vollständig korrigiert ist, zu kompensieren. Eine kürzere Brennweite f3 (< 2F) erschwert die Gestaltung der optischen Baugruppe G1 und insbesondere der Gruppe G2, wenn ein großer Arbeitsabstand OW zum Objekt 1 erforderlich ist. Im vorliegenden Beispiel beträgt f3/F = 3,14 und OW/F = 0,42.

Abgestimmt mit dem Ausgangsradius Rk, k = 11 (11. Fläche des Objektivs 2) mit R11/F 1,03, ist eine wie oben beschrieben gestaltete Baugruppe G3 ein wirkungsvolles Mittel, um für Objektive mit so hohen Aperturen und so großen Feldern die Korrektur der Abbildungsfehler bei geringer Linsenzahl (in diesem Beispiel acht) zu ermöglichen.

Bei der dargestellten ersten Ausführungsform beträgt das Verhältnis des Eintrittspupillendurchmessers ENP bei maximaler Vergrößerung des Vergrößerungswechslers zur Brennweite F des Objektivs 2 ENP/F = 0,56, so daß die bevorzugte Bedingung 0,55 < ENP/F ≤ 0,6 eingehalten ist. Der maximale Feldwinkel w1 des Objektivs 2 bei schwächster Vergrößerung erfüllt mit tan(w1) = 0,19 die Bedingung (B2) tan(w1) ≥ 0,16. Das dargestellte Objektiv 2 der ersten Ausführungsform erfüllt somit die Bedingungen (B1) und (B2), besitzt somit eine höhere Auflösung als bekannte Objektive und ist im gesamten Vergrößerungsbereich des Stereomikroskops nutzbar, insbesondere ohne Vignettierung bei schwacher Vergrößerung.

Die nachfolgende Tabelle 1 beschreibt im einzelnen die Daten der dargestellten ersten Ausführungsform, normiert für eine Brennweite von F = 100 mm. Hierbei besteht die Gruppe G1 aus einer Einzellinse (Flächennummern 1, 2), die Gruppe G2 aus drei Kittgliedern (Flächennummern 3, 4, 5; 6, 7, 8 und 9, 10, 11), die letzte Baugruppe G3 aus der Einzellinse 23 (Flächennummern 12 und 13).

Tabelle 1

| Gruppe | Flächennummer | Radius [mm] | Abstand [mm] | $n_d$ | $V_d$ | $P_{g,F}$ | $P_{C,t}$ |
|---|---|---|---|---|---|---|---|
|  | Objekt |  | 42.13 |  |  |  |  |
| G1 | 1 | -291.92 | 48.69 | 1.49700 | 81.6 | 0.5375 | 0.8236 |
| G1 | 2 | -65.47 | 1.25 |  |  |  |  |
| G2 | 3 | 2181.33 | 41.95 | 1.49700 | 81.6 | 0.5375 | 0.8236 |
| G2 | 4 | -76.18 | 9.99 | 1.80518 | 25.4 | 0.6161 | 0.6680 |
| G2 | 5 | -145.47 | 0.25 |  |  |  |  |
| G2 | 6 | 137.39 | 52.31 | 1.49700 | 81.6 | 0.5375 | 0.8236 |
| G2 | 7 | -119.86 | 9.99 | 1.61336 | 44.5 | 0.5590 | 0.7936 |
| G2 | 8 | -572.97 | 0.50 |  |  |  |  |
| G2 | 9 | 1128.57 | 23.85 | 1.80518 | 25.4 | 0.6161 | 0.6680 |
| G2 | 10 | -162.05 | 10.36 | 1.61336 | 44.5 | 0.5590 | 0.7936 |
| G2 | 11 | 103.47 | 14.33 |  |  |  |  |
| G3 | 12 | 425.00 | 28.09 | 1.49700 | 81.6 | 0.5375 | 0.8236 |
| G3 | 13 | -240.91 |  |  |  |  |  |

In den Zeilen der Tabelle sind von links nach rechts die Gruppennummer, die Flächennummer, der Krümmungsradius, der Abstand zur nächsten Fläche, die Brechzahl $n_d$, die Dispersion $v_d$ und die partiellen Teildispersionen $P_{g,F}$ und $P_{C,t}$ aufgelistet. Es bedeuten $n_d$ der Brechungsindex, $v_d = (n_d -1) / (n_F - n_C)$ die Abbezahl, $P_{g,F} = (n_g - n_F) / (n_F - n_C)$ die relative Teildispersion für die Wellenlängen g und F, und $P_{C,t} = (n_C - n_t) / (n_F - n_C)$ die relative Teildispersion für die Wellenlängen C und t. Ein Luftabstand ist durch eine Leerzeile in der Materialangabe gekennzeichnet.

Die Wellenlängen g und F bezeichnen die blaue Quecksilber- bzw. blaue Wasserstofflinie bei 435,83 nm bzw. 486,13 nm. Die Wellenlängen C und t bezeichnen die rote Wasserstoff- bzw. infrarote Quecksilberlinie bei 656,27 nm bzw. 1013,98 nm. Die Wellenlänge d bezeichnet die gelbe Heliumlinie bei 587,56 nm.

Dieser Objektivtyp zeichnet sich bei geeigneter Wahl von optischen Gläsern durch eine hohe Güte der Korrektur der Farbfehler aus. Bei Verwendung von speziellen Gläsern sind nicht nur die primären Farbfehler korrigiert sondern auch das sekundäre Spektrum deutlich reduziert. Für die Mehrzahl der Gläser ("Normalgläser") gelten näherungsweise die linearen Beziehungen ("Normalgeraden")

$$P_{n\,g,F} = 0.6438 - 0.001682 * v_d \,,$$

$$P_{n\,C,t} = 0.5450 + 0.004743 * v_d.$$

Die in diesem Ausführungsbeispiel verwendeten Gläser folgen diesen linearen Beziehungen nicht, sondern weichen von mindestens einer dieser linearen Beziehungen ab. Die Abweichungen der relativen Teildispersionen von der Normalgeraden betragen

$$|\,P_{g,F} - P_{n\,g,F}\,| > 0.0075$$

oder

$$|\,P_{C,t} - P_{n\,C,t}\,| > 0.025.$$

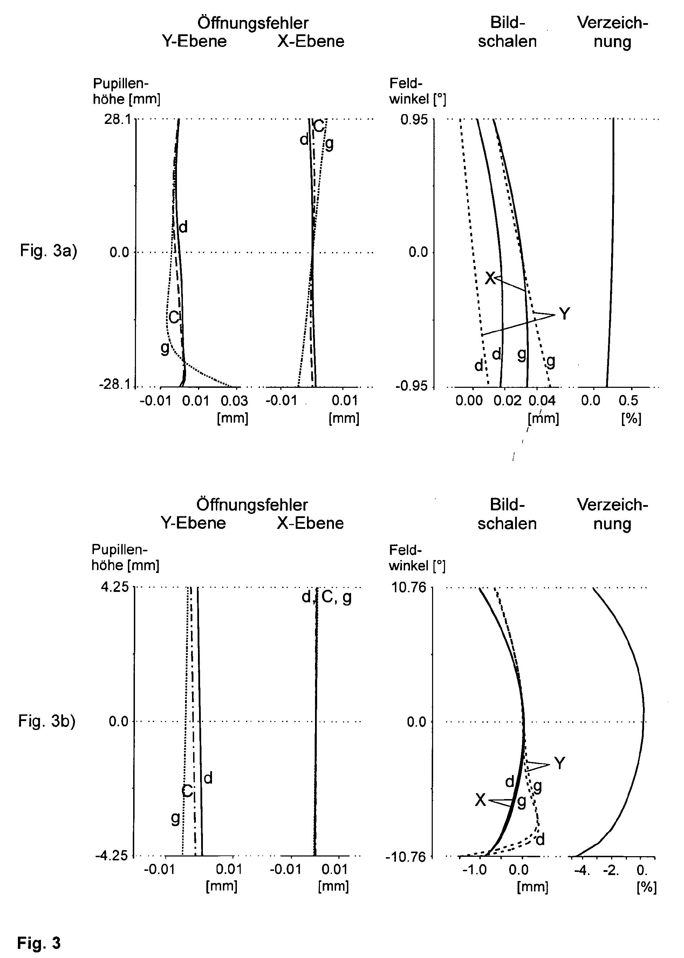

Die Abbildungsleistung des Objektivs 2 ist in Figur 3 dargestellt, oben für den Fall der stärksten Mikroskopvergrößerung (Figur 3a), unten für den Fall der schwächsten Vergrößerung (Figur 3b).

Die Abbildungsfehler werden, wie in der Mikroskopie üblich, in umgekehrter Lichtrichtung ermittelt, d.h. die Aberrationen werden in der Objektebene angegeben, wobei ein aus dem Unendlichen kommendes Strahlenbündel entgegen der Lichtrichtung durch das Objektiv abgebildet wird.

Dargestellt sind der Öffnungsfehler als Queraberration, die Bildschalen als Längsaberration und die Verzeichnung in Prozent.

Wegen des zur optischen Achse 9 des Objektivs 2 unsymmetrischen Durchgangs des Lichtbündels durch das Objektiv 2 ist der Öffnungsfehler sowohl in einem Schnitt (Y-Ebene), der beide optischen Achsen des Vergrößerungswechslers 3 enthält, als auch in einem dazu senkrechten Schnitt (X-Ebene) aufgetragen. Beide Öffnungsfehler sind für die Wellenlängen d = 587,56 nm, C = 656,28 nm und g = 435,83 nm in Abhängigkeit von der relativen Pupillenhöhe (in mm) dargestellt.

Die Bildschalen sind in Abhängigkeit vom Feldwinkel w (in °) für die Wellenlängen d und g sowohl in der γ-Ebene als auch in der X-Ebene angegeben. Die Verzeichnung in der Y-Ebene ist ebenfalls in Abhängigkeit vom Feldwinkel w für die Wellenlänge d in Prozent dargestellt.

Die Eintrittspupillen sind zu den Achsen des jeweiligen Vergrößerungswechslers 3L, 3R zentriert. Der Abstand der Achsen der Vergrößerungswechsler 3L und 3R beträgt 59,9 mm. In Figur 3a ist der Durchmesser der Eintrittspupille EP = 56,18 mm. Die Pupille ist 2,5 mm längs der Achse des Vergrößerungswechslers vom Objektiv 2 entfernt angeordnet. Der maximale Feldwinkel w beträgt 0,95°.

In Figur 3b ist der Durchmesser der Eintrittspupille EP = 8,49 mm. Die Pupille ist 102,4 mm längs der Achse des Vergrößerungswechslers vom Objektiv entfernt angeordnet. Der maximale Feldwinkel w1 = 10,76 °.

In bekannter Weise erhält man durch Multiplikation aller Radien und Abstände mit einem Faktor c aus den Angaben der Tabelle 1 ein Objektiv der Brennweite F = c x 100mm. Die bevorzugte Ausführungsbrennweite ist F = 40mm, demgemäß beträgt c = 0,4. Mit demselben Faktor c sind auch die oben stehenden Angaben zu den Pupillen und ebenfalls die Quer- und Längsaberrationen der Figur 3 zu skalieren, um eine Angabe dieser Größen für die bevorzugte Ausführungsbrennweite zu erhalten.

Ein Vergleich des sich aus der numerischen Apertur ergebenden Durchmessers des Beugungsscheibchens mir der geringen Größe der Queraberrationen des Öffnungsfehlers für die Linie d gemäß Figur 3a nach Skalierung für die Ausführungsbrennweite F = 40mm zeigt dem Fachmann, daß das Objektiv die aufgrund der hohen Apertur erwartete, höher als bisher ausfallende Auflösung auch gewährleistet.

Die ebenfalls für die Wellenlängen C und g angegebenen Öffnungsfehler belegen die weitgehende Reduktion der sekundären Farbfehler.

Ferner ist aus Figur 2b ersichtlich, daß der Feldwinkel w1 ohne Vignettierung nutzbar ist, da das Strahlenbüschel 21 nicht beschnitten wird. Der Figur 3b entnimmt man nach Skalierung auf die Brennweite F = 40mm die uneingeschränkte Nutzbarkeit des gesamten Gesichtsfeldes für stereoskopische Betrachtungen, wie der hervorragend korrigierte Öffnungsfehler und die geringen Längsaberrationen der Bildschalen bei einer mäßigen Verzeichnung belegen.

**Zweite Ausführungsform**

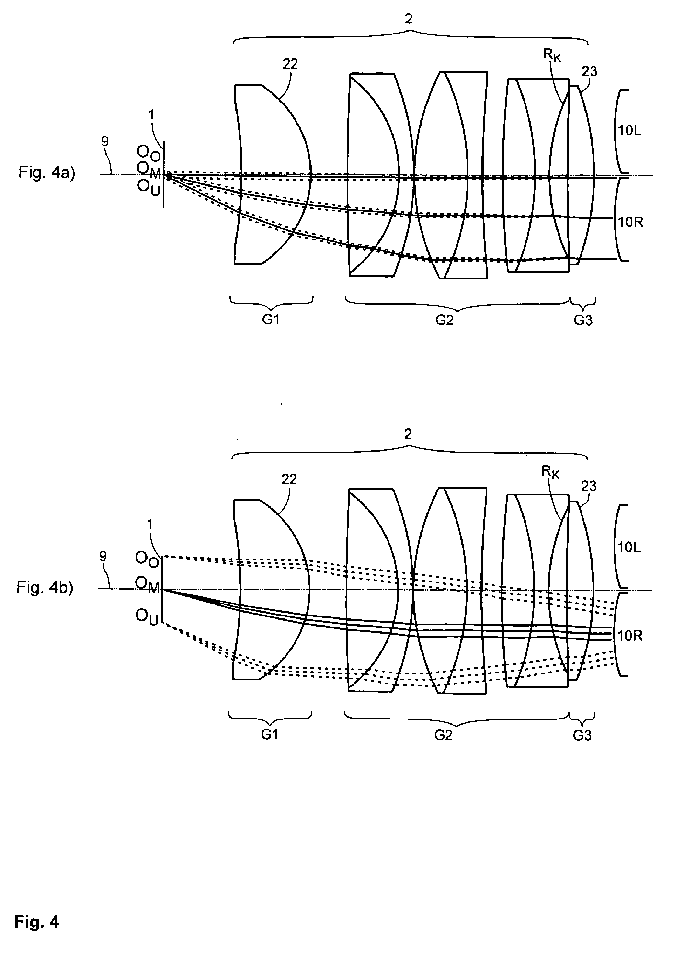

Figur 4 zeigt schematisch einen Linsenschnitt durch die zweite Ausführungsform. Gleiche Bestandteile wie in Figur 2 sind mit gleichen Bezugszeichen versehen. Soweit im folgenden nichts anderes ausgeführt wird, gelten für das in Figur 4 dargestellte Objektiv 2 die gleichen Ausführungen wie zur ersten Ausführungsform.

Das Objektiv 2 ist wiederum aus acht Linsen aufgebaut. Die optische Baugruppe G1 besteht aus einer Einzellinse 22, für die gilt: f1/F = 1,46, womit die Bedingung 1,3 < f1/F < 1,8 erfüllt ist. Weiterhin ist die optische Baugruppe G3 als Einzellinse 23 ausgeführt, für die gilt f3/F = 2,49, womit die Bedingung 2 < f3/F < 4 erfüllt ist. Zu den sich hieraus ergebenden Vorteilen gilt das oben im Zusammenhang mit der ersten Ausführungsform ausgeführte.

Für die letzte Fläche der zweiten optischen Baugruppe G2 (elfte Fläche des Objektivs 2) gilt R11/F = 1,07, was die Bedingung 0,7 < Rk/F < 1,1 (k = 11) erfüllt. Für die Objektweite gilt in diesem Ausführungsbeispiel OW/F = 0,42. Zu der Erfüllung der genannten Bedingungen gilt wiederum das im Zusammenhang mit der ersten Ausführungsform beschriebene.

Bei der dargestellten zweiten Ausführungsform beträgt das Verhältnis des Eintrittspupillendurchmessers ENP bei maximaler Vergrößerung des Vergrößerungswechslers zur Brennweite F des Objektivs 2: ENP/F = 0,44. Weiterhin gilt für den maximalen Feldwinkel w1 des Objektivs 2 bei schwächster Vergrößerung: tan(w1) = 0,19. Das Objektiv 2 der zweiten Ausführungsform erfüllt somit die erfindungsgemäßen Bedingungen (B1) und (B2) . Es besitzt somit eine höhere Auflösung als bekannte Objektive, die im gesamten Vergrößerungsbereich des Stereomikroskops nutzbar sind.

Die nachfolgende Tabelle 2 beschreibt im einzelnen die Daten der dargestellten zweiten Ausführungsform, normiert für eine Brennweite von F = 100 mm. Hierbei besteht die Gruppe G1 aus einer Einzellinse (Flächennummern 1, 2), die Gruppe G2 aus wiederum drei Kittgliedern (Flächennummern 3, 4, 5; 6, 7, 8 und 9, 10, 11), die letzte Baugruppe G3 aus der Einzellinse 23 (Flächennummern 12 und 13).

Tabelle 2

| Gruppe | Flächennummer | Radius [mm] | Abstand [mm] | $n_d$ | $v_d$ | $P_{g,F}$ | $P_{C,t}$ |
|---|---|---|---|---|---|---|---|
| | Objekt | | 42.00 | | | | |
| G1 | 1 | -217.52 | 37.60 | 1.49700 | 81.6 | 0.5375 | 0.8236 |
| G1 | 2 | -57.59 | 20.41 | | | | |
| G2 | 3 | 1012.75 | 27.68 | 1.49700 | 81.6 | 0.5375 | 0.8236 |
| G2 | 4 | -67.35 | 7.83 | 1.80518 | 25.4 | 0.6161 | 0.6680 |
| G2 | 5 | -145.90 | 0.20 | | | | |
| G2 | 6 | 120.00 | 29.22 | 1.49700 | 81.6 | 0.5375 | 0.8236 |
| G2 | 7 | -129.70 | 7.83 | 1.61336 | 44.5 | 0.5590 | 0.7936 |
| G2 | 8 | 544.70 | 10.98 | | | | |
| G2 | 9 | 480.42 | 17.53 | 1.80518 | 25.4 | 0.6161 | 0.6680 |
| G2 | 10 | -135.47 | 7.83 | 1.61336 | 44.5 | 0.5590 | 0.7936 |
| G2 | 11 | 106.88 | 9.60 | | | | |
| G3 | 12 | 1150.29 | 14.17 | 1.49700 | 81.6 | 0.5375 | 0.8236 |
| G3 | 13 | -138.32 | | | | | |

Zu den Daten in dieser Tabelle gilt das im Zusammenhang mit der ersten Ausführungsform gesagte.

Auch für die für die zweite Ausführungsform verwendeten Gläser gelten die für die erste Ausführungsform angegebenen Abweichungen der relativen Teildispersionen von den Normalgeraden. Dies ergibt einen Objektivtyp, der sich durch eine hohe Güte der Korrektur der Farbfehler auszeichnet.

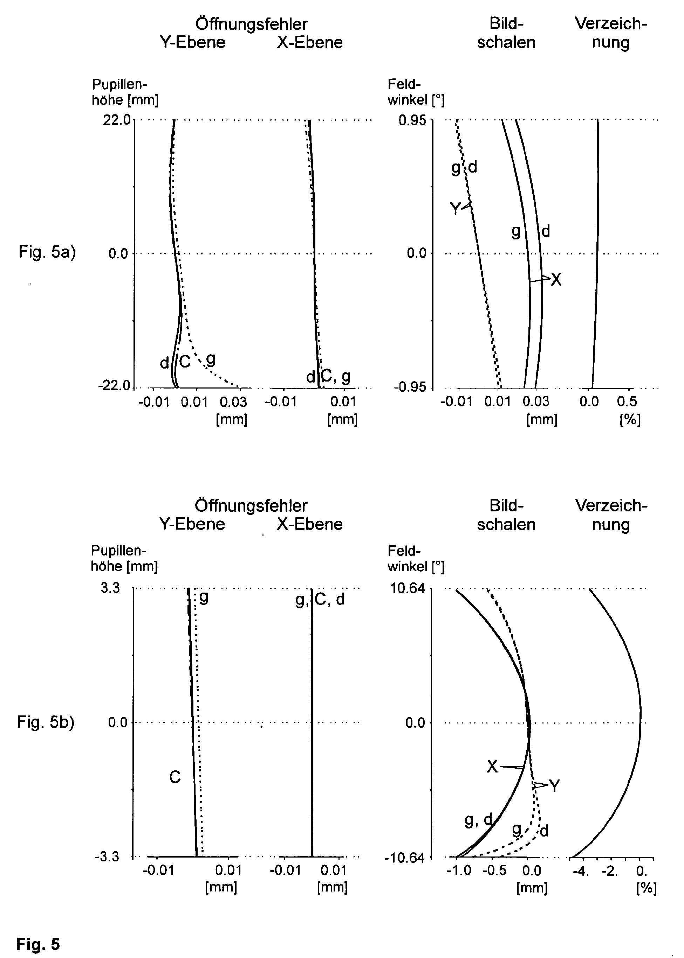

Die Abbildungsleistung des Objektivs ist in Figur 5 dargestellt.

Die Art der Darstellung erfolgt in gleicher Weise wie in Figur 3, so dass die dortigen Aussagen auch hier zutreffen. Der Abstand der Achsen der Vergrößerungswechsler 3L und 3R beträgt in diesem Fall 47,0 mm.

In Figur 5a ist der Durchmesser der Eintrittspupille ENP = 44,0 mm. Die Pupille ist 2,0 mm längs der Achse der Vergrößerungswechslers vom Objektiv entfernt angeordnet. Der maximale Feldwinkel w = 0,95 °.

In Figur 5b ist der Durchmesser der Pupille EP = 6,65 mm. Die Pupille ist 80,2 mm längs der Achse des Vergrößerungswechslers vom Objektiv entfernt angeordnet. Der maximale Feldwinkel ist w1 = 10,64 °.

Hinsichtlich der Skalierung und der erzielten Abbildungsleistung gelten in analoger Weise die zur ersten Ausführungsform gemachten Aussagen. Die bevorzugte Brennweite F des Objektivs gemäß zweiter Ausführungsform ist etwa 50mm.

### Dritte Ausführungsform

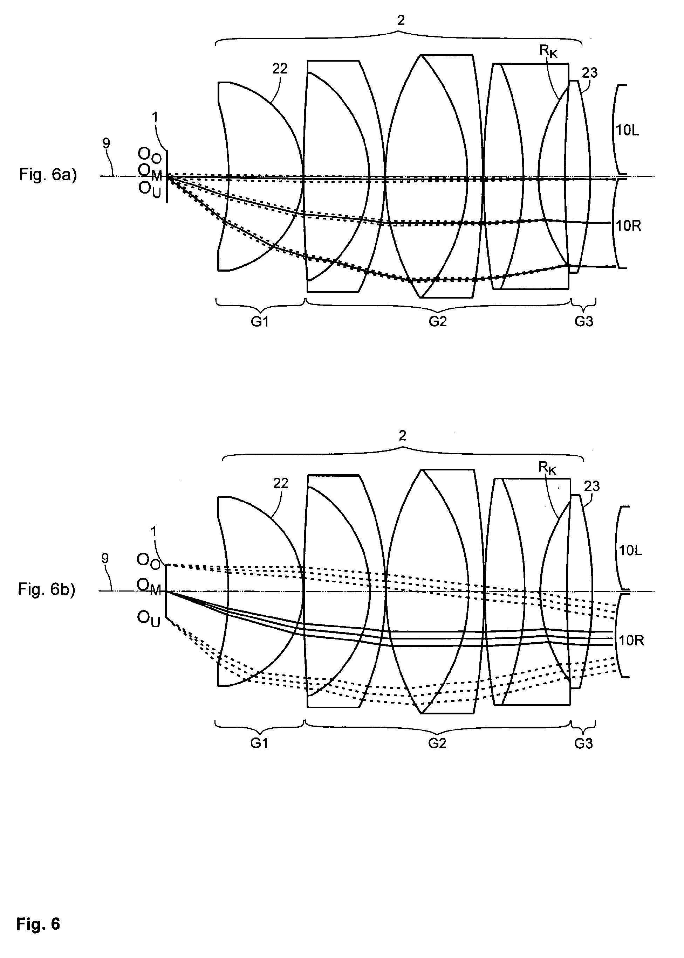

Figur 6 zeigt schematisch den Linsenschnitt durch die dritte Ausführungsform eines erfindungsgemäßen Objektivs 2. Auch dieses Objektiv besteht aus fünf durch Luftabstände getrennte Gliedern, die in drei Gruppen unterteilt werden können. Die erste optische Baugruppe G1 ist als Einzellinse 22 und die dritte optische Baugruppe G3 ist ebenfalls als Einzellinse 23 ausgeführt. Drei Kittglieder bilden die optische Baugruppe G2. Das Objektiv 2 besteht insgesamt aus acht Linsen.

Wiederum sind in Figur 6 gleiche Bestandteile wie bei den vorhergehenden Ausführungsformen mit gleichen Bezugsziffern bezeichnet. Im übrigen gelten, soweit im folgenden nichts anderes ausgesagt wird, die gleichen Ausführungen wie im Zusammenhang mit den beiden oben beschriebenen Ausführungsformen.

Für das Objektiv 2 der dritten Ausführungsform gilt: ENP/F = 0,6, womit die erfindungsgemäße Bedingung (B1) erfüllt ist, sowie tan(w1) = 0,19, womit die zweite erfindungsgemäße Bedingung (B2) erfüllt ist. Weiterhin gilt für die Brennweite f1 der Baugruppe G1 (Einzellinse 22) f1/F = 1,70, womit 1,3 < f1/F < 1,8 erfüllt ist, für die Brennweite f3 der dritten optischen Baugruppe G3 (Einzellinse 23) gilt f3/F = 3,68 und somit 2 < f3/F < 4.

Weiterhin gilt für die Objektweite OW/F = 0,42 und für den letzten Radius (elfte Fläche) der Baugruppe G2, der zur Baugruppe G3 weist, gilt R11/F = 1,05. Somit sind für die dritte Ausführungsform auch die Bedingungen 0,7 < Rk/F < 1,1 und OW/F ≥ 0,42 erfüllt.

Die sich aus der Erfüllung der oben genannten Bedingungen ergebenden Vorteile sind bereits ausführlich im Zusammenhang mit den beiden oben beschriebenen Ausführungsformen erläutert worden. Es gilt hier das oben gesagte.

Die nachfolgende Tabelle 3 beschreibt im einzelnen die Daten der dargestellten dritten Ausführungsform, normiert für eine Brennweite F = 100 mm. Die Zuordnung der Flächennummern zu den jeweiligen Gruppen erfolgt in gleicher Weise wie für die oben beschriebenen Ausführungsformen.

Tabelle 3

| Gruppe | Flächennummer | Radius [mm] | Abstand [mm] | $n_d$ | $V_d$ | $P_g,F$ | $P_{C,t}$ |
|---|---|---|---|---|---|---|---|
|  | Objekt |  | 42.00 |  |  |  |  |
| G1 | 1 | -192.62 | 51.14 | 1.52855 | 76.98 | 0.5401 | 0.8111 |
| G1 | 2 | -66.82 | 0.27 |  |  |  |  |
| G2 | 3 | 977.72 | 45.32 | 1.52855 | 76.98 | 0.5401 | 0.8111 |
| G2 | 4 | -83.11 | 10.67 | 1.80518 | 25.4 | 0.6161 | 0.6680 |
| G2 | 5 | -183.88 | 0.27 |  |  |  |  |
| G2 | 6 | 158.41 | 55.97 | 1.52855 | 76.98 | 0.5401 | 0.8111 |
| G2 | 7 | -126.76 | 10.67 | 1.63775 | 42.41 | 0.5605 | 0.7880 |
| G2 | 8 | -487.71 | 0.53 |  |  |  |  |
| G2 | 9 | 457.69 | 27.12 | 1.80518 | 25.4 | 0.6161 | 0.6680 |
| G2 | 10 | -201.59 | 10.67 | 1.63775 | 42.41 | 0.5605 | 0.7880 |
| G2 | 11 | 105.15 | 17.86 |  |  |  |  |
| G3 | 12 | 794.95 | 17.56 | 1.52855 | 76.98 | 0.5401 | 0.8111 |
| G3 | 13 | -255.98 |  |  |  |  |  |

Zu den Tabellendaten gilt ebenfalls das bereits oben ausgeführte. Auch die für die dritte Ausführungsform verwendeten Gläser weichen von mindestens einer der für die relativen Teildispersionen geltenden Normalgeraden um Beträge ab, wie sie für die erste Ausführungsform bereits angegeben wurden.

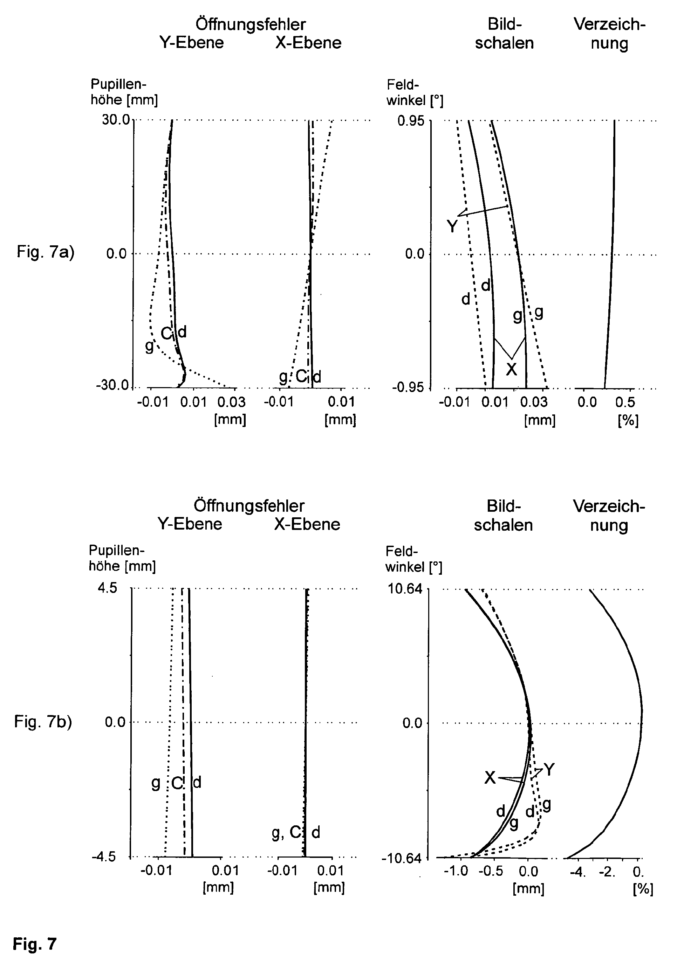

Die Abbildungsleistung des Objektivs ist in Figur 7 dargestellt, oben für den Fall der stärksten Mikroskopvergrößerung (Figur 7a) unten für den Fall der schwächsten Vergrößerung (Figur 7b). Die Darstellungen erfolgen in völlig analoger Weise wie in den bereits behandelten Figuren 3 und 5, so dass die dortigen Aussagen auch hier zutreffen.

Der Abstand der Achsen der Vergrößerungswechsler 3L und 3R beträgt in diesem Fall 47,0 mm.

In Figur 7a ist der Durchmesser der Eintrittspupille ENP= 60,0 mm. Die Pupille ist 2,7 mm längs der Achse des Vergrößerungswechslers vom Objektiv entfernt angeordnet. Der maximale Feldwinkel w = 0,95°.

In Figur 7b beträgt der Durchmesser der Pupille EP = 9,1 mm. Die Pupille ist 109,3 mm längs der Achse des Vergrößerungswechslers vom Objektiv entfernt angeordnet. Der maximale Feldwinkel w1 = 10,64 °.

Hinsichtlich der Skalierung und der erzielten Abbildungsleistung gelten in analoger Weise die zur ersten Ausführungsform gemachten Aussagen. Die bevorzugte Brennweite F des Objektivs gemäß dritter Ausführungsform ist 37,5mm.

Die drei behandelten Ausführungsformen des erfindungsgemäßen Objektivs zeigen gute Abbildungseigenschaften und sind aus den oben angegebenen Gründen in besonderem Maße für Stereomikroskope vom Teleskoptyp geeignet. Es sei darauf hingewiesen, dass das erfindungsgemäße Objektiv auch in den zwischen der höchsten und niedrigsten Vergrößerung liegenden Stellungen sehr gute Abbildungseigenschaften besitzt.

## Liste der Bezeichnungen

| | |
|---|---|
| 1 | Objekt |
| 2 | Objektiv |
| 3L, 3R | Vergrößerungswechsler im linken bzw. rechten Kanal |
| 4L, 4R | Tubuslinse im linken bzw. rechten Kanal |
| 5L, 5R | Bildumkehrsystem im linken bzw. rechten Kanal |
| 6L, 6R | Zwischenbild im linken bzw. rechten Kanal |
| 7L, 7R | Okular im linken bzw. rechten Kanal |
| 8L, 8R | linkes bzw. rechtes Auge |
| 9 | Achse des Objektivs |
| 10L, 10R | linker bzw. rechter Beobachtungskanal im Stereomikroskop |
| | |
| 20 | Strahlenbüschel von der Objektmitte |
| 21 | Strahlenbüschel vom oberen und unteren Objektrand |
| 22 | Einzellinse (erste Gruppe G1) |
| 23 | Einzellinse (dritte Gruppe G3) |
| | |
| c | Skalierungsfaktor |
| ENP | Durchmesser der Eintrittspupille des Vergrößerungswechslers bei höchster Vergrößerung |
| EP | Durchmesser der Eintrittspupille des Vergrößerungswechslers |
| F | Brennweite des Objektivs |
| f1 | Brennweite der 1. Gruppe (G1) des Objektivs |
| f3 | Brennweite der 3. Gruppe (G3) des Objektivs |
| G1..G3 | Bezeichnung der optischen Baugruppen, aus denen das Objektiv zusammengesetzt ist. |
| nA | numerische Apertur eines Objektivs |
| OM | Mitte des Objektfeldes |
| Oo | Oberer Rand des Objektfeldes |
| Ou | Unterer Rand des Objektfeldes |
| OW | Abstand Objektebene zur 1. Fläche von (G1) |
| Rk | der zur 3. Gruppe (G3) des Objektivs weisende letzte (k-te) Flächenradius der 2. Gruppe (G2) |
| u, uR, uL | Halber Öffnungswinkel des Strahlenkegels mit Spitze in der Objektmitte, der durch ENP begrenzt wird |
| w | Feldwinkel des Objektivs |
| w1 | maximaler Feldwinkel des Objektivs bei schwächster Vergrösserung |
| z | Verhältnis von maximaler zu minimaler Vergrösserung des Vergrösserungswechslers |

**Patentansprüche**

1. Objektiv (2) für Stereomikroskope vom Teleskop-Typ, das drei optische Baugruppen (G1, G2, G3) beinhaltet, wobei die erste Baugruppe (G1) zur Objektseite hin und die dritte Baugruppe (G3) zu einem Vergrößerungswechsler (3L, 3R) hin angeordnet ist,
**dadurch gekennzeichnet,**
**daß** folgende Bedingungen erfüllt sind:

$$0,44 \leq ENP/F \leq 0,6$$

und

$$tan\ (w1) \geq 0{,}16,$$

wobei
ENP den Durchmesser der Eintrittspupille des Vergrößerungswechslers (3L, 3R) bei höchster Vergrößerung, F die Brennweite des Objektives (2) und w1 den maximalen Feldwinkel des Objektives (2) bei schwächster Vergrößerung des Vergrößerungswechslers (3L, 3R) bezeichnet.

2. Objektiv nach Anspruch 1, **dadurch gekennzeichnet, daß**

$$0{,}55 \leq \frac{ENP}{F} \leq 0{,}6.$$

3. Objektiv nach Anspruch 1 oder 2, **dadurch gekennzeichnet, daß**

$$2 < f3/F < 4,$$

wobei
f3 die Brennweite der dritten optischen Baugruppe (G3) darstellt.

4. Objektiv nach Anspruch 3, **dadurch gekennzeichnet, daß** die optische Baugruppe (G3) aus einer Einzellinse (23) besteht.

5. Objektiv nach einem der Ansprüche 1 bis 4, **dadurch gekennzeichnet, daß** die Bedingung

$$0{,}7 < Rk/F < 1{,}1$$

erfüllt ist, wobei
Rk der zur dritten optischen Baugruppe (G3) weisende letzte Radius der zweiten Baugruppe (G2) ist.

6. Objektiv nach einem der Ansprüche 1 bis 5, **dadurch gekennzeichnet, daß** die Bedingung

$$OW/F \geq 0{,}42$$

erfüllt ist, wobei
OW den Abstand der Objektebene zur ersten Fläche der ersten optischen Baugruppe (G1) bezeichnet.

7. Objektiv nach einem der Ansprüche 1 bis 6, **dadurch gekennzeichnet, daß** die Bedingung

$$1{,}3 < f1/F < 1{,}8$$

erfüllt ist, wobei
f1 die Brennweite der ersten optischen Baugruppe (G1) darstellt.

8. Objektiv nach Anspruch 7, **dadurch gekennzeichnet, daß** die erste optische Baugruppe (G1) aus einer Einzellinse (22) besteht.

9. Objektiv nach einem der Ansprüche 1 bis 8, **dadurch gekennzeichnet, daß** das Objektiv aus maximal 8 Linsen zusammengesetzt ist.

10. Objektiv nach einem der Ansprüche 1 bis 9, **gekennzeichnet durch** die Verwendung von Glas in einer Positivlinse der dritten optischen Baugruppe (G3), das einer der Bedingungen

$$| P_{g,F} - 0{,}6438 + 0{,}001682 \times v_d | > 0{,}0075$$

oder

$$| P_{C,t} - 0{,}5450 - 0{,}004743 \times v_d | > 0{,}025$$

genügt, wobei $v_d = (n_d - 1) / (n_F - n_C)$ die Abbezahl, $P_{g,F} = (n_g - n_F) / (n_F - n_C)$ die relative Teildispersion für die Wellenlängen g und F, und $P_{C,t} = (n_C - n_t) / (n_F - n_C)$ die relative Teildispersion für die Wellenlängen C und t bedeutet und n die Brechzahl bei der jeweiligen Wellenlänge darstellt.

**11.** Objektiv nach einem der Ansprüche 1 bis 10, **dadurch gekennzeichnet, daß** die optischen Baugruppen (G1, G2, G3) aus maximal 3 verschiedenen Materialien aufgebaut sind.

**12.** Objektiv nach einem der Ansprüche 1 bis 11, **dadurch gekennzeichnet, daß** alle verwendeten Materialien für die optischen Baugruppen (G1, G2, G3) einer der Bedingungen aus Anspruch 10 genügen.

**13.** Objektiv nach einem der vorhergehenden Ansprüche, **gekennzeichnet durch** die auf eine Objektivbrennweite von F = 100mm bezogenen Konstruktionsdaten nachfolgender Tabelle:

| Gruppe | Flächennummer | Radius [mm] | Abstand [mm] | $n_d$ | $V_d$ | $P_{g,F}$ | $P_{C,t}$ |
|---|---|---|---|---|---|---|---|
| | Objekt | | 42.13 | | | | |
| G1 | 1 | -291.92 | 48.69 | 1.49700 | 81.6 | 0.5375 | 0.8236 |
| G1 | 2 | -65.47 | 1.25 | | | | |
| G2 | 3 | 2181.33 | 41.95 | 1.49700 | 81.6 | 0.5375 | 0.8236 |
| G2 | 4 | -76.18 | 9.99 | 1.80518 | 25.4 | 0.6161 | 0.6680 |
| G2 | 5 | -145.47 | 0.25 | | | | |
| G2 | 6 | 137.39 | 52.31 | 1.49700 | 81.6 | 0.5375 | 0.8236 |
| G2 | 7 | -119.86 | 9.99 | 1.61336 | 44.5 | 0.5590 | 0.7936 |
| G2 | 8 | -572.97 | 0.50 | | | | |
| G2 | 9 | 1128.57 | 23.85 | 1.80518 | 25.4 | 0.6161 | 0.6680 |
| G2 | 10 | -162.05 | 10.36 | 1.61336 | 44.5 | 0.5590 | 0.7936 |
| G2 | 11 | 103.47 | 14.33 | | | | |
| G3 | 12 | 425.00 | 28.09 | 1.49700 | 81.6 | 0.5375 | 0.8236 |
| G3 | 13 | -240.91 | | | | | |

wobei in den Zeilen der Tabelle von links nach rechts die Gruppennummer, die Flächennummer, der Krümmungsradius, der Abstand zur nächsten Fläche, die Brechzahl $n_d$, die Dispersion $v_d$ und die partiellen Teildispersionen $P_{g,F}$ und $P_{C,t}$ aufgelistet sind, wobei $n_d$ der Brechungsindex, $v_d = (n_d - 1) / (n_F - n_C)$ die Abbezahl, $P_{g,F} = (n_g - n_F) / (n_F - n_C)$ die relative Teildispersion für die Wellenlängen g und F und $P_{C,t} = (n_C - n_t) / (n_F - n_C)$ die relative Teildispersion für die Wellenlängen C und t bedeutet, und wobei ein Luftabstand **durch** eine Leerzeile in der Materialangabe **gekennzeichnet** ist.

**14.** Stereomikroskop vom Teleskop-Typ mit einem Objektiv (2) nach einem der Ansprüche 1 bis 13 als Hauptobjektiv.

**Fig. 1**

Fig. 2a)

Fig. 2b)

Fig. 2

Fig. 3

Fig. 4a)

Fig. 4b)

**Fig. 4**

Öffnungsfehler
Y-Ebene    X-Ebene

Bild-    Verzeich-
schalen    nung

Fig. 5a)

Öffnungsfehler
Y-Ebene    X-Ebene

Bild-    Verzeich-
schalen    nung

Fig. 5b)

Fig. 5

Fig. 6a)

Fig. 6b)

**Fig. 6**

Fig. 7a)

Öffnungsfehler
Y-Ebene    X-Ebene

Bild-schalen    Verzeich-nung

Fig. 7b)

Öffnungsfehler
Y-Ebene    X-Ebene

Bild-schalen    Verzeich-nung

**Fig. 7**